# EUROPEAN PATENT APPLICATION

(11) **EP 4 350 639 A1**
(43) Date of publication of application: **10.04.2024**
(21) Application number: 22306504.6
(22) Date of filing: 07.10.2022
(51) Int. Cl.: G06V 10/82, G06V 20/52

(54) **SAFETY RULE VIOLATION DETECTION IN A CONSTRUCTION OR CONSTRUCTED SITE**

(71) Applicant: TotalEnergies OneTech, 92400 Courbevoie (FR)
(72) Inventor: Guillon, Sebastien, Boulogne Billancourt (FR); Gourvenec, Sebastien, Roinville (FR); Lapene, Alexandre, Clichy (FR); Bertoncello, Antoine, Marnes la Coquette (FR); Ramachandra Rao, Sanjay Kamath, Puteaux (FR)
(74) Representative: Bandpay & Greuter

(57) **Abstract**

The disclosure notably relates to a computer-implemented method for safety rule violation detection in a construction or constructed site. The method comprises providing an input image of a construction or constructed site. The method further comprises detecting in the input image at least one item related to a safety rule of the site by applying an item-detection neural network. The item-detection neural network is configured for detection in the image of items related to safety rules of the site. The method further comprises determining whether the input image corresponds to a safety rule violation by automatically processing the detected at least one item based on the context of the input image.

## Description

### TECHNICAL FIELD

The disclosure relates to the field of computer programs and systems, and more specifically to methods, a system and a program for safety rule violation detection in a construction or constructed site.

### BACKGROUND

Safety in construction sites and in constructed sites, e.g. for building, control, and/or maintenance tasks, is an increasing preoccupation. Safety rules are often established in these contexts and must not be violated.

There is however a need for improved solutions for safety rule violation determination.

### SUMMARY

It is therefore provided a computer-implemented method for safety rule violation detection in a construction or constructed site. The method comprises providing an input image of a construction or constructed site. The method further comprises detecting in the input image at least one item related to a safety rule of the site by applying an item-detection neural network. The item-detection neural network is configured for detection in the image of items related to safety rules of the site. The method further comprises determining whether the input image corresponds to a safety rule violation by automatically processing the detected at least one item based on the context of the input image. This method may be referred to as "the detection method".

The detection method may comprise one or more of the following features:
- the method further comprises detecting a context of the input image by applying one or more contextualization-detection neural networks, said contextualization-detection neural networks being configured for contextualization-detection in an input image, wherein the determining of whether the input image corresponds to a site safety rule violation comprising automatically processing the detected at least one item and the detected context;
- the method further comprises applying a caption-generating neural network to the detected context and at least one item to determine a caption describing the image, wherein the processing comprising automatically comparing the caption to a set of reference site safety rule violations; and/or
- comparing the caption to the set of reference safety rule violations comprises querying a dictionary of site safety rule violation words with words of the caption.

It is also provided a computer implemented method of machine-learning, for training the item-detection neural network. The method of machine-learning comprises providing a training dataset of images. The training dataset comprises synthetized images each of a constructed or construction site and each labelled with at least one label of an item related to a safety rule of the site. The method of machine-learning comprises training the neural network based on the training dataset. This method may be referred to as "the learning method".

The learning method may comprise one or more of the following features:
- the method further comprises synthetizing images of the training dataset.
- the training dataset further comprises real images each of a constructed or construction site and each labelled with at least one label of an item related to a safety rule of the site;
- the training comprises a first training with the synthetized images and then a second training with the real images;
- the item-detection neural network has the EfficientDet CNN architecture, the R-CNN architecture, the Fast R-CNN architecture, or the Yolo architecture;
- the item-detection neural network is trained to take as input an image of a constructed or construction site and to detect in the image one or more items related to safety rules of the site, wherein for each detected item, the neural network is trained to output a bounding box around the item with a label specifying the detected item;
- the training comprises minimizing a loss that includes a sum of:
   ∘ a first term that penalizes a covering difference between a bounding box of a labelled item in an input image of the training dataset and a bounding box predicted by the neural network for the same item; and
   ∘ a second term that is a Focal Loss; and/or
- the item-detection neural network is configured for detection of safety equipment and.

It is further provided a computer program comprising instructions for performing any one or both of the methods.

It is further provided a computer readable storage medium having recorded thereon the computer program.

It is further provided a computer system comprising a processor coupled to a memory, the memory having recorded thereon the computer program.

### BRIEF DESCRIPTION OF THE DRAWINGS

Non-limiting examples will now be described in reference to the accompanying drawings, where:
- FIG.s 1 to 15 illustrate the methods; and

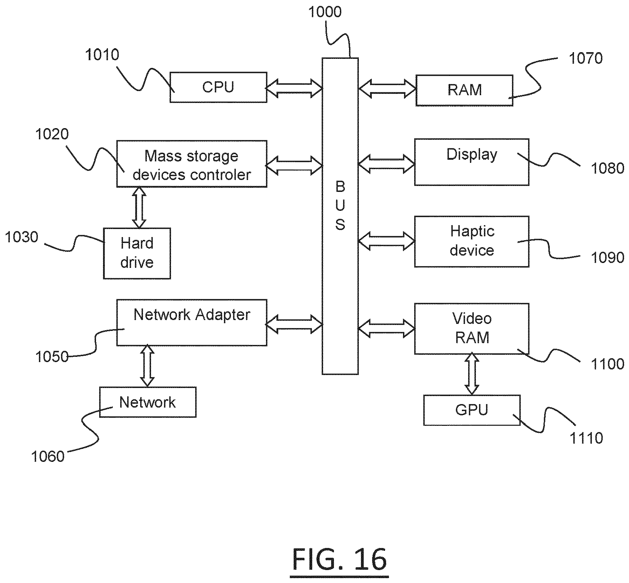

- FIG. 16 shows an example of the system.

### DETAILED DESCRIPTION

It is provided a computer-implemented method for safety rule violation detection in a construction or constructed site. The method comprises providing an input image of a construction or constructed site. The method further comprises detecting in the input image at least one item related to a safety rule of the site by applying an item-detection neural network. The item-detection neural network is configured for detection in the image of items related to safety rules of the site. The method further comprises determining whether the input image corresponds to a safety rule violation by automatically processing the detected at least one item based on the context of the input image. This method may be referred to as the "detection method".

The detection method forms an improved solution for safety rule violation detection in a construction or constructed site.

Notably, the detection method enables detection of a safety rule violation in a constructed or construction site, based on an image of this site. The detection method may thereby be used in applications using detection of safety rule violation, where safety rule violation is detected by applying the neural network to an image or a group of images (e.g. natural, such as photographs or video-camera frames). For example, the detection method may be used to provide safety rule violations statistics, to provide improved and/or supplementary surveillance of a site, to alert in real-time emergency services further to a safety rule violation.

Furthermore, the detection method performs safety rule violation detection by using a neural network (the item-detection neural network) that detects safety-related items in the image of the site (e.g. safety or protection equipment, worn by humans, such as helmets, harnesses). The detection method then automatically processes these detected items based on the context (e.g. a work at height) represented in the input image. The detection method thereby efficiently combines the fast and efficient item detection that neural networks can provide with a context-based post processing to efficiently associate safety-related items with a context to detect whether or not the image truly represents a safety rule violation situation. The combination of the item-detection neural network with the context-based post-processing allows to avoid or at least efficiently reduce false positives (i.e. erroneous detection of safety rule violations).

The detection method may thereby be used in applications using detection of safety rule violation, where safety rule violation is detected by applying the detection method to an image or a group of images (e.g. natural, such as photographs or video-camera frames). For example, the method may be used to provide safety rule violations statistics, to provide improved and/or supplementary surveillance of a site, and/or to alert in real-time emergency services further to a safety rule violation.

The detection method may be executed in real-time during monitoring of the site, for detecting in real-time safety rule violations in the site. For that, the providing of the input image may consist in providing in real-time an image of the site, for example acquired in real-time by a camera or video camera of the site, and the subsequent steps of the detection method may then be executed substantially in real-time upon receiving the input image, so as to detect in real-time whether this image corresponds to a site safety rule violation or not. The method may comprise sending a signal or an instruction to an alarm system of the site upon detection of a safety rule violation and/or alerting in real-time emergency services upon detection of a safety rule violation.

The detection method may also be used to provide safety rule violations statistics, to provide improved and/or supplementary surveillance of a site, to alert in real-time emergency services further to a safety rule violation, as previously discussed. This may comprise processing the output(s) of the method (i.e. the detected safety rule violation(s) when the method is applied to input image(s)) by applying statistics methods to obtain safety rule violations statistics (e.g. for a same site), e.g. for making safety recommendations. Processing the output(s) may additionally or alternatively comprise taking decisions and/or actions for improving surveillance of a site based on the output(s) and/or for improving existing safety procedures of the site and/or for establishing new safety procedures of the site.

It is also provided a computer implemented method of machine-learning, for training the item-detection neural network. The method of machine-learning comprises providing a training dataset of images. The training dataset comprises synthetized images each of a constructed or construction site and each labelled with at least one label of an item related to a safety rule of the site. The method of machine-learning comprises training the neural network based on the training dataset. The method may be referred to as "the learning method".

The learning method forms an improved tool for safety rule violation detection.

Notably, the learning method learns the item-detection neural network that is used by the detection method, and thus provides a tool for safety rule violation detection in the input image of the detection method. The learning method trains the item-detection neural network to detect items related to safety in an input image, such as helmets or harnesses, thereby providing a solution contributing to the detection of safety rule violations in the image in the detection method. Machine-learning provides robustness and efficiency for the item detection.

Furthermore, not only does the learning method provide a tool for safety rule violation detection/determination, but the learning method does so in an improved and robust manner. Indeed, natural images (e.g. photographs or video camera frames) of construction or constructed sites may be difficult to obtain (e.g. due to privacy problems), and thus forming a training dataset of natural images for training the item-detection neural network is in practice not feasible. Yet, despite training on natural image is in practice not feasible, safety-related item (i.e. item related to a safety rule of the site) detection in an image is in practical applications to be done on natural images. The learning method solves this problem by using as part of the training data synthetized virtual construction or constructed site images and for training the item-detection neural network. As a result the training relies on a sufficiently large training dataset that comprises virtual images that are sufficiently variable and/or numerous, which would not be in practice possible when using natural images. Furthermore, the learning method thereby takes advantage of the existing solutions (e.g. video-games engine solutions) for synthetizing virtual images having a high level of realism. Training the item-detection neural network using such images then allows the item-detection neural network to take as input a natural image, such as a photograph or a video-camera frame, on which the neural network still performs robustly, since the virtual images used during training may have a high level of realism. In examples, the input image of the item-detection neural network may be a photograph or a video-camera frame, the photo or the frame being for example taken from a safety camera or video camera of a construction or constructed site.

The detection method and the learning method may be integrated into a same process which comprises: performing the learning method (for example as an offline stage), which yields the item-detection neural network, and then performing the detection method.

The detection method is now further discussed.

The detection method is for safety rule violation detection in a construction or constructed site. This means that the output of the detection method is, for a given input image of the site, data describing whether or not the input image corresponds to a safety rule violation, that is the violation of at least one safety rule of the site. Such data may simply consist in data (e.g. text) indicating whether a safety rule violation exists based on what is represented in the image. Alternatively, such data may also include data (e.g. text) indicating which safety rules of the site are violated.

The detection method comprises providing an input image of a construction or constructed site. The input image may be a photograph or a video-camera frame, for example taken by a safety camera or video camera of the site. Providing the input image may comprise accessing, retrieving, or downloading the input image, e.g. from a (e.g. distant) database or server or memory where the image has been stored further to its acquisition. Providing the image may for example comprise transmitting, e.g. through a network, the image from a (e.g. remote) computer or server where the image has been stored further to its acquisition and to another computer (e.g. a client computer of a user) where the remaining steps of the detection method are to be executed. Providing the input image may alternatively comprise acquiring the image, *e.g.* in real-time, *e.g.* by operating a camera or video camera of the site, e.g. from a client computer of a user.

Each image herein, be it the input image an image of the training dataset, is an image of a construction site or of a constructed site. This means that the image represents the site or only a scene of the site, *i.e.* a portion of the site. A constructed site is a site already constructed, *e*.*g*. such as constructed gas station or a constructed (*e*.*g*. hybrid) power plant or a constructed factory. Each image herein that is an image of a constructed site may be an image of the constructed site under maintenance (*i*.*e*. subject to maintenance operations) or under exploitation (*i*.*e*. subject to its normal exploitation) or under renovation (*i*.*e*. subject to renovation work). For example, the constructed site may be site such as a gas station having solar panels already installed on its roof and subject to a maintenance operation of the solar panels. A construction site is a site being constructed, for example any type of building site. For example, the constructed site may be a gas station on which installation of solar panels on the roof is being performed. Each site herein may comprise humans *(e.g.* operators), *e.g.* one or more of which performing a task that requires respect of one or more safety rules.

Each safety rule herein may concern safety of a human operator on the constructed or construction site, *i*.*e*. the safety rule is designed to ensure safety of the human operator. Any safety rule herein may concern safety during work at height, such as a work on a roof. For example, any image herein may corresponds to an installation of solar panels on a roof, *i*.*e*. may represent a scene where solar panels are being installed on a roof. The roof may for example be the roof of a gas station. For work at height, *e*.*g*. on a roof, the safety rules may include one or more of:
- wear appropriate protective equipment for working at height (*e*.*g*. working at a height higher than a given threshold, *e*.*g*. higher than 1m, for example higher than or equal to 1.2m, 1.5m, 1.8m or 2m). The protective equipment may include a hard hat and/or a harness. The danger of violating the rule is falling (*e*.*g*. from a roof);
- wear appropriate protective equipment for working at a distance from a roof edge that is lower than a predefined safety distance (*e*.*g*. larger than or equal to 1m or 2m or 3m). The protective equipment may include a hard hat and/or a harness. The danger of violating the rule is falling from the roof;
- wear appropriate protective equipment for working under a load being lifted *(e.g.* during a lifting operation) or under a worker *(e.g.* under a ladder/scaffold). The protective equipment may include a hard hat. The danger of violating the rule is being struck by a falling object;
- wear appropriate protective equipment and/or do not work in case of poor weather (*e*.*g*. rain and/or wind) and/or for performing certain tasks. The protective equipment may include a hard hat, a harness, and/or goggles. The danger of violating the rule is a physical injury;
- lanyard of harness properly attached for the work at height, for the work at a distance from a roof edge that is lower than the predefined threshold, and/or in the case of poor weather. The danger of violating the rule is falling;
- presence of rail guards for the work at height and/or for the work at a distance from a roof edge that is lower than the predefined threshold. The danger of violating the rule is falling;
- presence of net if humans are working below each other. The danger of violating the rule is being struck by a falling object or human;
- avoid being of a top of a moving vehicle (*e*.*g*. a truck). The danger of violating the rule is falling from the vehicle;
- never be under lifting operations. The danger of violating the rule is being struck by a falling object; and/or
- respect of proper postures (*e*.*g*. avoiding picking something up without bending knee, and/or avoid overreach while working at height). The danger of violating a safety rule is injury.

Violation of a safety rule may thus involve two aspects: the context depicted by the input image (*e*.*g*. work at height or work close to a roof edge), and the presence or absence of safety-related items in the image in connection with this context (*e*.*g*. presence or absence of a helmet and/or of a harness for work at height). The detection method thereby detects violation or not of a safety rule by detecting the presence or absence of safety-related items and by using them along with the context of the scene represented by the input image.

For that, further to the providing of the input image, the detection method comprises detecting in the input image at least one item related to a safety rule of the site by applying an item-detection neural network. This means that the method comprises applying the item-detection neural network, and this application results in the detection, in the input image, of one or more items related to a safety rule of the site. The item-detection neural network is a neural network that is configured for detection in the image of items related to safety rules of the site. This means that the item-detection neural network takes as input the image and outputs one or more items related to safety rules of the site that are depicted in the image (if any). The item-detection neural network may for example output a respective bounding box around each detected item, and for example a caption or a label associated with the bounding box and specifying the detected item (*e*.*g*. "helmet") and/or a confidence score associated with the detection (*i*.*e*. a score that indicates a measure of certainty/confidence of the detection). If the image does not represent any such item, the neural network may output any data describing that no safety-related items have been detected. The items detected by the item detection neural network may be small items (*i*.*e*. having a size lower than a predefined threshold) and/or safety/protection equipment items (*i*.*e*. the item-detection neural network detects safety/protection equipment worn by human operators such as helmets, but not other items *e*.*g*. such as vehicles or scaffolds or humans).

Then, the detection method further comprises determining whether the input image corresponds to a safety rule violation by automatically processing the detected at least one item based on the context of the input image. In other words, the computer system that carries out the method automatically processes the safety-related items detected by the item-detection neural network using as well the context depicted in the image. In yet other words, the user need not and does not intervene for using the context to process the detected item(s) and conclude whether there is a site safety rule violation in the image. The user may however launch the processing. The processing may comprise detecting the context of the scene represented in the input image, for example by machine-learning, and then processing both the detected context and the detected item(s), *e*.*g*. processing captions describing the context and the item(s). The determining of whether the input image corresponds to a safety rule violation may output any data that describes whether there is a violation or not, such as for example a text, a number (*e*.*g*. 0 or 1) and/or a color indication of whether there is or not a violation. The data may further comprise data (*e*.*g*. text) describing which safety rule(s) is/are violated, if any. The data may further include a confidence score of whether there is a violation or not, such as a probability value.

The method may further comprise detecting a context of the input image by applying one or more a contextualization-detection neural networks. The contextualization-detection neural network(s) are configured for contextualization-detection in an input image, *i*.*e*. the contextualization-detection neural network(s) are configured to take as input the image and to contextualize the scene represented in the image. By "contextualize", it is meant contributing to describe the context represented in the image. This may comprise outputting a description (*e*.*g*. a text description) of the context depicted in the image, *e*.*g*. in the form of one or more captions describing the context, *e*.*g*. some of these captions being associated to detected bounding boxes around context-related items. The determining of whether the input image corresponds to a site safety rule violation comprises in this case automatically processing the detected at least one item and the detected context. The processing analyses automatically the detected item(s) and context, or data describing them (*e*.*g*. captions) and determine therefrom whether these/this item(s) together with this context correspond to a safety rule violation.

The one or more contextualization-detection neural networks may comprise a first contextualization-detection neural network and a second contextualization-detection neural network. Thus, applying the contextualization-detection neural networks comprises in this case applying the first contextualization-detection neural network and the second contextualization-detection neural network. The first contextualization-detection neural network may be configured to determine an overall context of the scene represented by the image, such as a work at height, a work on a roof, and/or a work on a scaffold or ladder. Applying this first network thus provides such an overall context, *e*.*g*. in the form of a caption or label (which may be referred to as "captioning or "Image-to-text"). The second contextualization-detection neural network may be configured to detect in the scene context-related objects and/or large objects (*i*.*e*. having a size larger than a predefined threshold). For example, while the item-detection neural network may be configured for detection of safety equipment items worn by human operators, as previously discussed, the second contextualization-detection neural network may be configured for detecting the operators themselves and/or other items related to the context and/or of large size, and which are not safety equipment items worn by human operators. These other items may for example include any type of work equipment not worn by humans, such as vehicles, machines, scaffolds and/or ladders. The second contextualization-detection neural network may be configured for taking as input the context (*e*.*g*. in the form of a caption) detected by the first contextualization-detection neural network and then processing it to detect large items, for example by using the words of a caption of the context as outputted by the first network and replacing them on the large objects (*e*.*g*. by outputting bounding boxes around these objects with labels that are corresponding words the caption). The first contextualization-detection neural network may be the BLIP model (discussed in reference "BLIP: Bootstrapping Language-Image Pre-training for Unified Vision-Language Understanding and Generation", Junnan Li et. Al., arXiv:2201.12086v2 [cs.CV] 15 Feb 2022, which is incorporated herein by reference), the CoCa model (discussed in reference *"*CoCa: Contrastive Captioners are Image-Text Foundation Models", Jiahui Yu et. Al., arXiv:2205.01917, which is incorporated herein by reference), the GIT model (discussed in reference *"*GIT: A Generative Image-to-text Transformer for Vision and Language", Jianfeng Wang et. Al., arXiv:2205.14100, which is incorporated herein by reference), or the Lemon model (discussed in reference *"*Scaling Up Vision-Language Pre-training for Image Captioning", Xiaowei Hu et. Al., arXiv:2111.12233, which is incorporated herein by reference). The second contextualization-detection neural network may be the MDETR model (discussed in reference *"*MDETR -- Modulated Detection for End-to-End Multi-Modal Understanding", Aishwarya Kamath et. Al, arXiv:2104.12763, which is incorporated herein by reference), the LAVIS model (discussed in reference *"*LAVIS: A Library for Language-Vision Intelligence", Dongxu Li et. Al., arXiv:2209.09019, which is incorporated herein by reference), or the OCCAM model (discussed in reference *"*Interpretable Visual Reasoning via Induced Symbolic Space", Zhonghao Wang et. Al., arXiv:2011.11603, which is incorporated herein by reference). The first and second contextualization-detection neural networks may be already trained, *i*.*e*. the detection method does not comprise their training and only uses them.

The detection method may further comprise applying a caption-generating neural network to the detected context and at least one item to determine a caption describing the image. The caption-generating neural network is any suitable neural network configured for, and capable of, taking as input the detected context and item(s), or the captions or labels describing them as previously-discussed, and outputting an overall caption that describes the whole scene represented by the input image, *i*.*e*. that describes the context together with the detected item(s). For example, the caption may be a text of the type "An operator working close to a roof edge without a helmet and without an attached harness" or "A worker with hard hat and yellow vest sitting on a scaffolding at a construction site". Thereby, the application of the caption-generating neural network to the detected item(s) and context, or to captions or labels thereof, yields an overall caption of the scene represented by the input image, *i*.*e*. the overall caption describes the scene with the detected items in view of the context. In this case, the processing comprises automatically comparing the caption to a set of reference site safety rule violations. The automatic comparison may comprise using the caption as a query and querying the set of reference safety rule violations and determining which rules violations correspond to the caption. For example, a rule violation may be determined as corresponding to the caption if the caption and the rule violation have a disparity *(e.g.* in terms of a number of words, or a number of key words) lower than a predefined threshold. The set of safety rule violations may be predefined, i.e. may have been created beforehand, that is before execution of the method, for example at an initial or offline stage thereof. The caption-generating neural network may be the BLIP model, the Coca model, the GIT model, or the Lemon model, which have been previously discussed.

Comparing the caption to the set of reference safety rule violations may comprise querying a dictionary of site safety rule violation words with words of the caption. Querying the dictionary of site safety violation words may be carried out by any suitable method that determines whether the caption correspond to a safety rule violation based on a proximity between the words of the caption and the words in the dictionary (*e*.*g*. based on a number of words of the caption that are also in the dictionary). The dictionary forms the set of reference site safety rule violations. Querying the dictionary consists in searching the dictionary to determine which words of the captions correspond to the vocabulary of a safety rule (or more) by iterating over the words of the vocabulary.

The learning method and the item-detection neural network are now further discussed.

The learning method is a method of machine-learning, that learns the item-detection neural network of the detection method. As known *per se* from the field of machine-learning, the processing of an input by a neural network includes applying operations to the input, the operations being defined by data including weight values. Training (also referred to as "learning") a neural network thus includes determining values of the weights based on a dataset configured for such learning, such a dataset being referred to as a learning dataset or a training dataset. For that, the dataset includes data pieces each forming a respective training sample. The training samples represent the diversity of the situations where the neural network is to be used after being learnt. In the context of the present disclosure, by "training a neural network on a dataset", it is meant that the dataset is a learning/training dataset of the neural network, based on which the values of the weights (also referred to as "parameters") are inferred. The training samples of the method may comprise tens or hundreds of thousands of training samples, e.g. more than 10 000 or 100 000 training samples, or millions of training samples.

In the case of the learning method, the training dataset is the provided dataset comprising the synthetized virtual images each of a constructed or construction site and each labelled with at least one label of an item related to a safety rule of the site.

The training dataset comprises the synthetized virtual images. The training dataset may comprise other images, *e*.*g*. other virtual images and/or natural images. The training dataset may for example comprise a mix of virtual images (including the synthetized ones) and real images (also referred to as natural images), *e*.*g*. photographs and/or video-camera frames. That is, the training dataset may further comprise real images each of a constructed or construction site and each labelled with at least one label of an item related to a safety rule of the site. The real/natural images may have been acquired prior to the learning method by one or more cameras or video-cameras, *e*.*g*. surveillance cameras or video-cameras of a site. The training dataset may for example comprise hundreds of natural images and millions or hundreds of thousands synthetized images. The images of the training dataset may all be images of a same site, *i.e.* a same construction or constructed site, *e.g.* at different time points/time periods. This improves the learning, as the item-detection neural network does not learn the site but focuses on the items related to safety rules of the site. Alternatively, the training dataset may comprise images of different sites, which allows to take into account for site variability.

Each image (synthetized or natural, if any) of the training dataset or at least a part thereof is labelled with one or more labels each of a respective item related to a safety rule of the site (*e*.*g*. a label "helmet", or a label "harness"). Each safety rule may concern safety of a human operator on the constructed or construction site, *i*.*e*. the safety rule is designed to ensure safety of the human operator. The learning method may comprise labelling images of the training dataset with their label(s), *e*.*g*. further to the synthetizing of the virtual images. The training dataset may further comprise images (real and/or natural), for example in a small proportion relative to the number of images of the dataset, representing scenes where there is no item related to any safety rule of the site. These images may be unlabelled or labelled with a label indicating absence of any item to be detected by the item-detection neural network. Each image of the training dataset may comprise one or more bounding box each respective to a respective item (*i*.*e*. represented in the image) related to a safety rule of the site and surrounding the item. The bounding box may be associated with its 2D coordinates in the image and/or may be labelled with the label associated with the item. The items that the images of the training dataset may include safety/security equipment items such as helmets, harnesses, safety vests, and humans. Thus, the item-detection neural network is trained to detect these items.

Prior to the providing of the training dataset, the method comprises synthetizing these virtual images.

Synthetizing the virtual images may comprise applying any method for synthetizing images of a construction or constructed site. This may comprise using any suitable video-game environment (*i*.*e*. using any suitable video-game engine, for example any game-engine or real-time 3D engine, such as Unity or Unreal) for synthetizing the images. The synthetized images may be all images of a construction site, in which case the item-detection neural network is trained to handle construction site images (although this does not exclude the neural network to still achieve good results on constructed site images). The synthetized images may alternatively be all images of a constructed site, in which case the item-detection neural network is trained to handle constructed site images (although this does not exclude the neural network to achieve good results on construction site images). Yet alternatively, the synthetized images may comprise construction site images and constructed site images, in which case the item-detection neural network is trained to handle both types of images.

Synthetizing may comprise randomizing the images. Randomizing the images may comprise randomizing viewpoints of a same site or site portion, so that different viewpoints of a same site and/or different situations in a same site are captured by the synthetized images. Randomizing the viewpoints may comprise selecting a random coordinate in a sub-space of the 3D space (*e*.*g*. the height or the depth coordinate), for example according to a given probability distribution (*e*.*g*. a uniform or a gaussian probability distribution). Randomizing the images may additionally or alternatively comprise randomizing camera intrinsic parameters (*e*.*g*. focal length, image sensor format and/or principal point) and/or types, so that the synthetized images reproduce images taken by different camera types and/or according to different camera intrinsic parameters. This improves robustness of the item-detection neural network to the camera or video-camera used for taking the image fed as input to the item-detection neural network when used. Alternatively, each synthetized image may correspond to a fixed type of camera and/or a fixed set of camera intrinsic parameters, *e*.*g*. for applications when the camera taking the images to be fed as input to the item-detection neural network is known in advance. Randomizing the images may additionally or alternatively comprise randomizing the color and/or color parameters (*e*.*g*. opacity or brightness) of at least some portions of the images, to improve robustness of the item-detection neural network with respect to color changes.

Further to the providing of the training dataset, the learning method comprises training the neural network on the training dataset. In other words, the learning method uses the images of the training dataset to infer/set the weights of the learning neural network. The training trains the item-detection neural network to take as input an image of a construction or constructed site and to detect in the image items related to one or more safety rules of the site. The item-detection neural network may be configured for (*i*.*e*. trained for) detection of safety equipment. That is, the items detected by the neural networks are safety equipment items (also referred to as security equipment items, *i*.*e*. to be worn by human operators for safety) and human beings. The item-detection neural network may output, for each detected item, a bounding box around the item and/or a caption or label describing the item (for example a caption or label attached to the bounding box). In other words, the item-detection neural network may be trained to take as input an image of a constructed or construction site and to detect in the image one or more items related to safety rules of the site, wherein for each detected item, the neural network is trained to output a bounding box around the item with a label (or caption) specifying the detected item. The training may comprise, for each image used in the training, feeding (e.g. one or several times) the image to the item-detection neural network and modifying weights of the item-detection neural network as long as the item-detection neural network does not output a result in accordance with the label(s) of the fed image (or with the absence of label if the image has no label as previously discussed).

The training may thus be supervised. The training may be a batch by batch (*e*.*g*. mini-batch by mini-batch) training as discussed hereinafter. As discussed hereinafter, at each epoch of the training, the training may comprise visiting all the images of the training dataset and modifying them randomly before feeding them as input to the neural network. The supervised training may be done in two times as previously discussed: loading the network with its weights pre-trained (for example using COCO pre-trained weights), training the network on the synthesized data, and then training the network on the real data. The training may comprise, for each phase of the training, splitting the training data into three parts: a first part (for example 80% of the data) for the training a second part (for example 10% of the data) for the validation (i.e. at each epoch the network is tested on this second part), and a third part (for example 10% of the data) for the testing (*i*.*e*. this part is never seen during training and is used to test the performances of the trained network, *e*.*g*. to compare them with performances of other models).

The neural network comprises weights, as previously discussed, and the learning comprises inferring/setting the values of the weights. For that, the learning/training may comprise applying an optimization algorithm to a loss function for updating the weights to optimize the loss function based on the training dataset. The training may comprise a first training with the synthetized images and then a second training with the real images, that is a first optimization of the weights using the synthetized images and a second optimization of the weights using the real/natural images.

The item-detection neural network may have the EfficientDet CNN architecture. In this case, the training may comprise minimizing a loss which includes a sum of a first term and a second term. The first term penalizes a covering difference between a bounding box of a labelled item in an input image of the training dataset and a bounding box predicted by the neural network for the same item. The covering difference may be a difference between the area covered by the bounding box of the input image and the area covered by the predicted bounding box. The second term is a Focal Loss. The minimizing of the loss may be carried out two times: one time for the synthetized images and one time for the real images, as previously discussed. Alternative architecture to the EfficientDet CNN may also be used: the item-detection neural network may alternatively have the R-CNN architecture (discussed in reference *"*Rich feature hierarchies for accurate object detection and semantic segmentation, Tech report (v5)", Ross Girshick et. Al., arXiv:1311.2524v5 [cs.CV] 22 Oct 2014, which is incorporated herein by reference), the Fast R-CNN architecture (discussed for example in reference *"*Faster R-CNN: Toward Real-Time Object Detection with Region Proposal Networks", Shaoqing Ren et. Al., arXiv:1506.01497v3 [cs.CV] 6 Jan 2016, which is incorporated herein by reference, or the YOLO architecture (discussed for example in reference *"*You Only Look Once: Unified, Real-Time, Object Detection", Joseph Redmon et. Al., arXiv:1506.02640v5 [cs.CV] 9 May 2016, which is incorporated herein by reference).

Examples of the methods are now discussed with reference of FIG.s 1 to 9.

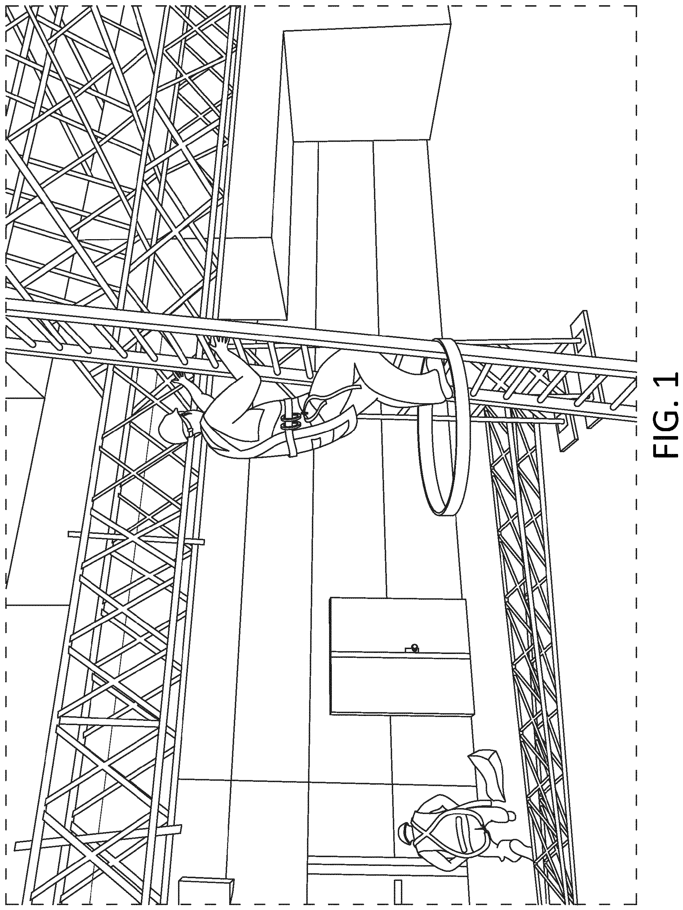

FIG. 1 shows an schematic illustration of an example of a synthetized image used in the training dataset in an example of the learning method. The image is not yet labelled and does not comprise any bounding box yet. The image represents a construction operation in a site. FIG. 1 shows a first worker having a harness but not on a ladder, which means that there is no safety rule violation. FIG. 1 shows a second worker with a harness and on a ladder, which means that there is no safety rule violation.

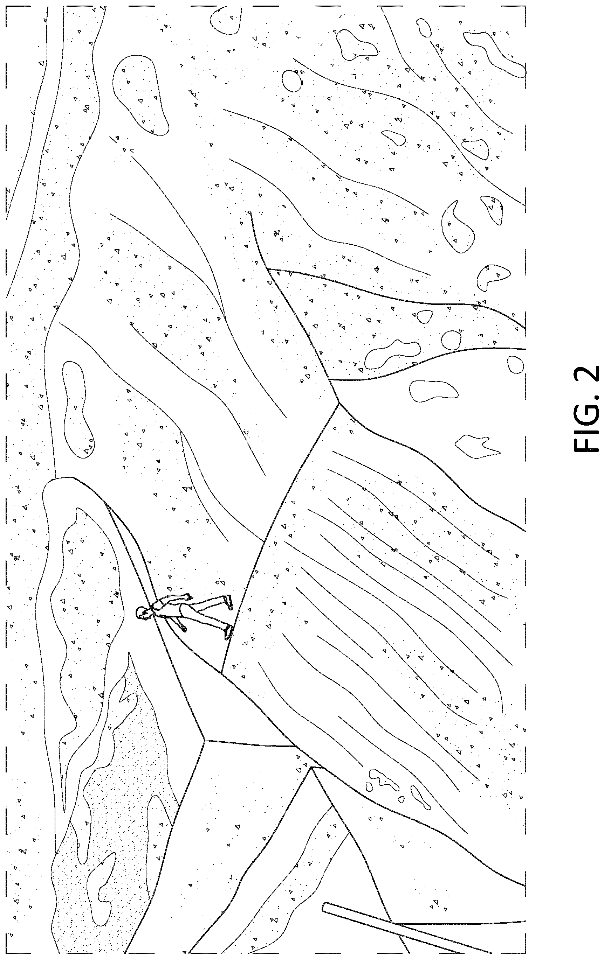

FIG. 2 shows a schematic illustration of an example of a synthetized image not yet labelled, where a worker stands on the edge of a dirt mount during earthwork in a building site. The safety rule that the worker must always be at a safety distance from the edge of the mount is violated. There is a risk of falling. A decision that may be taken to enforce this safety rule is to materialize safety areas which are at a distance larger than the safety distance from the edge and to prevent access of the areas which are at a distance lower than the safety distance from the edge.

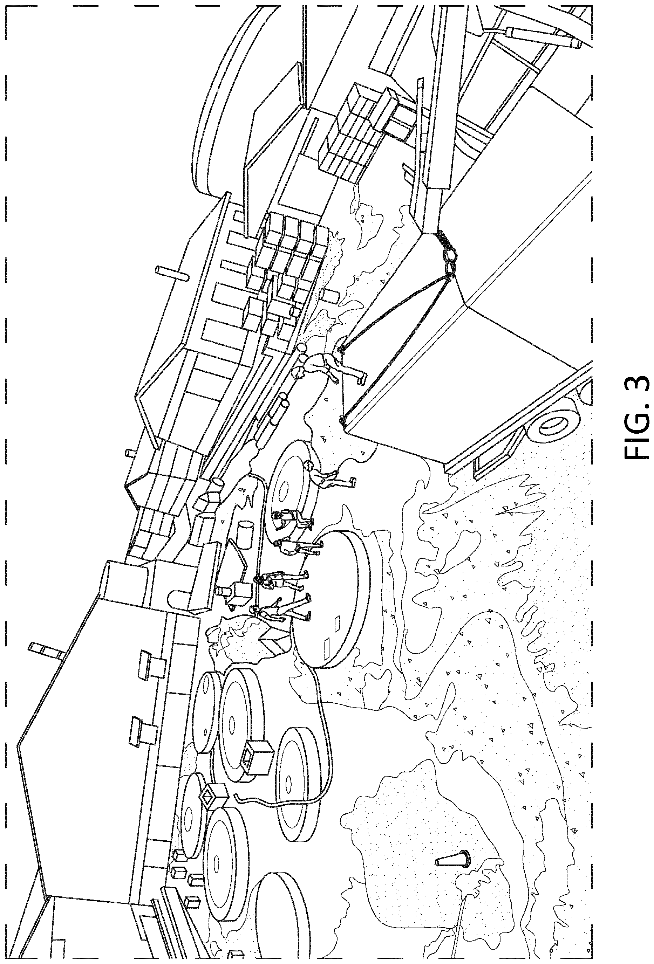

FIG. 3 shows a schematic illustration of an example of a natural image where a worker stands on the roof of a container, which is a violation of the safety rule that requires not to stand on the roof of a container. Also, the worker has a poor positioning (bending forward). There is a risk of falling. A decision that may be taken to improve safety in such situation is to establish an operating mode of the contained (e.g. for removing the ropes after lift-up) that increases safety.

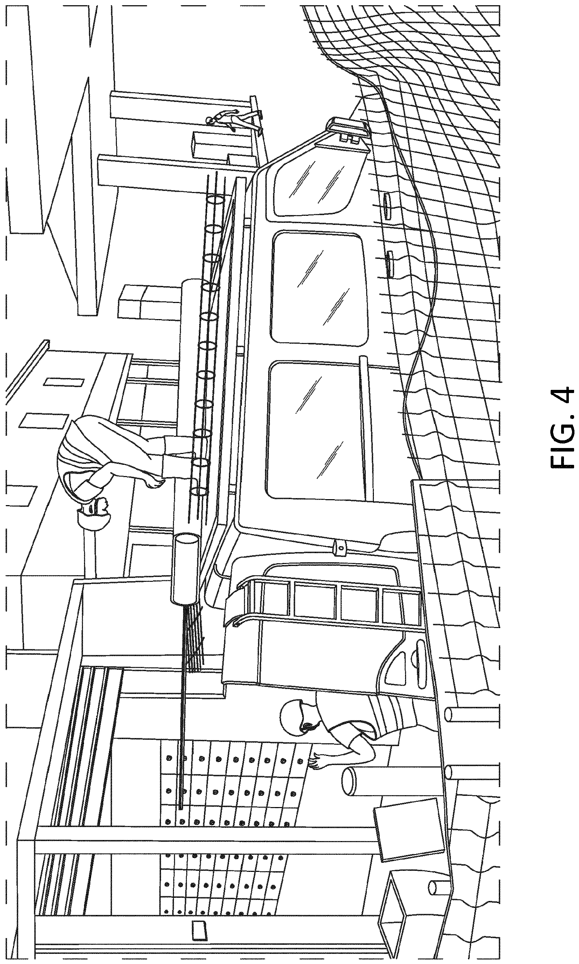

FIG. 4 shows a schematic illustration of an example of a natural image where a worker stands on the roof of a moving truck, which is a violation of the safety rule that requires not to stand on the roof of a moving truck.

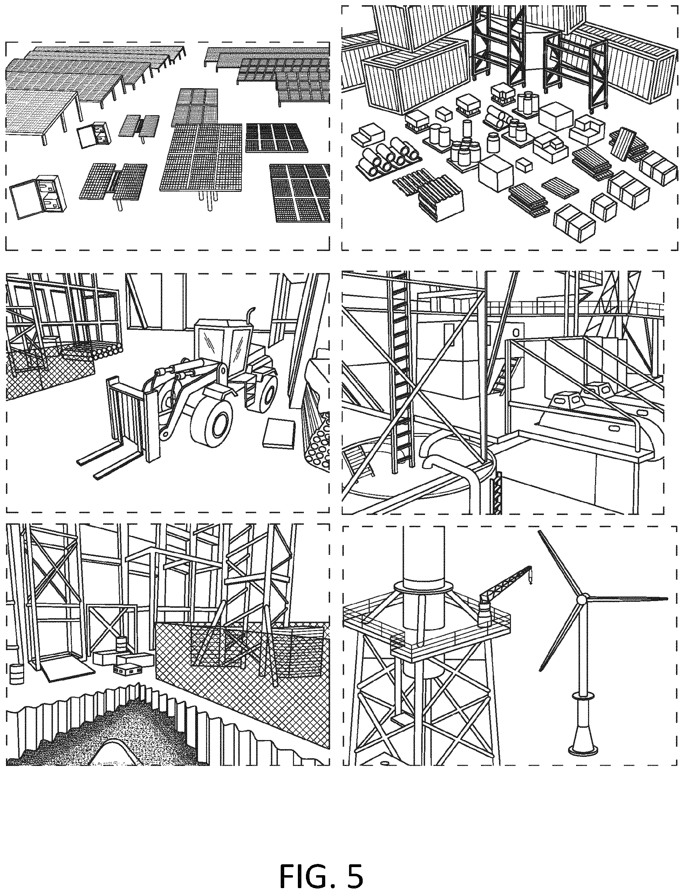

FIG. 5 shows a schematic illustration of screenshots of examples of virtual construction or constructed sites from video-games environment that may be used to synthetized virtual images of the training dataset.

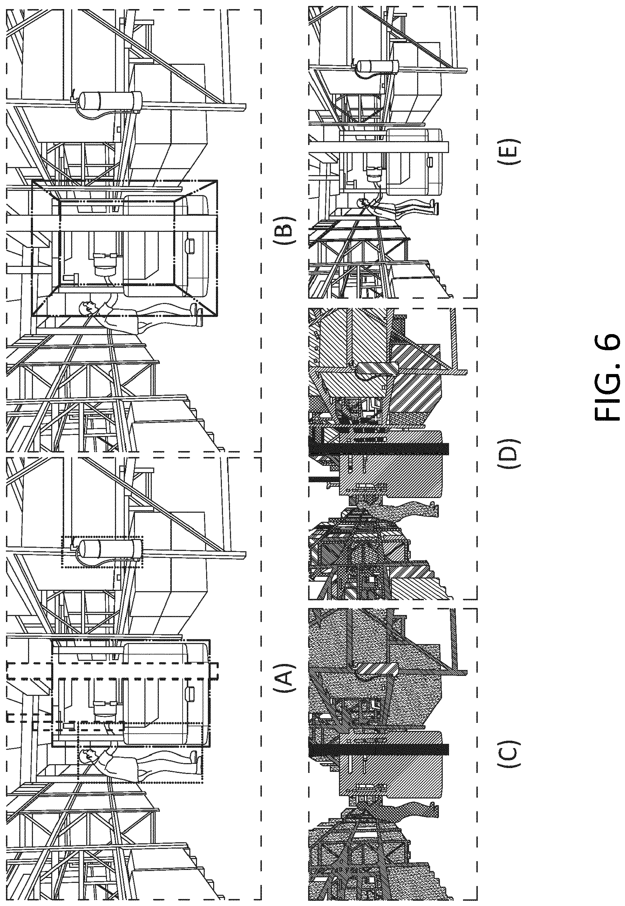

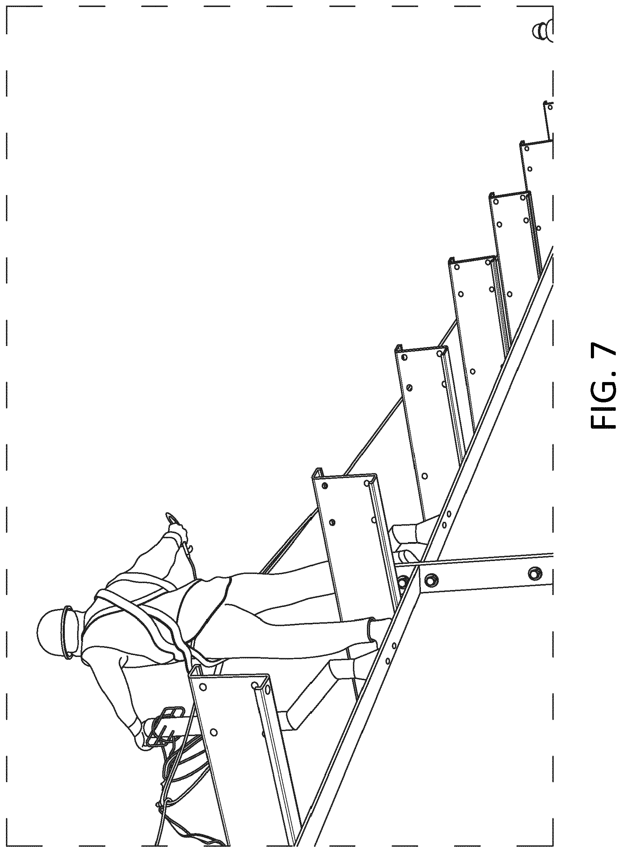

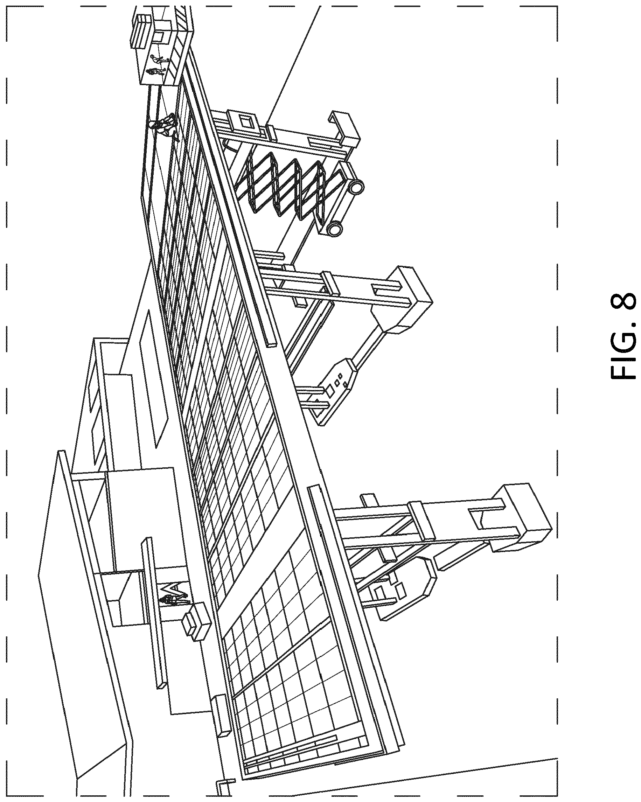

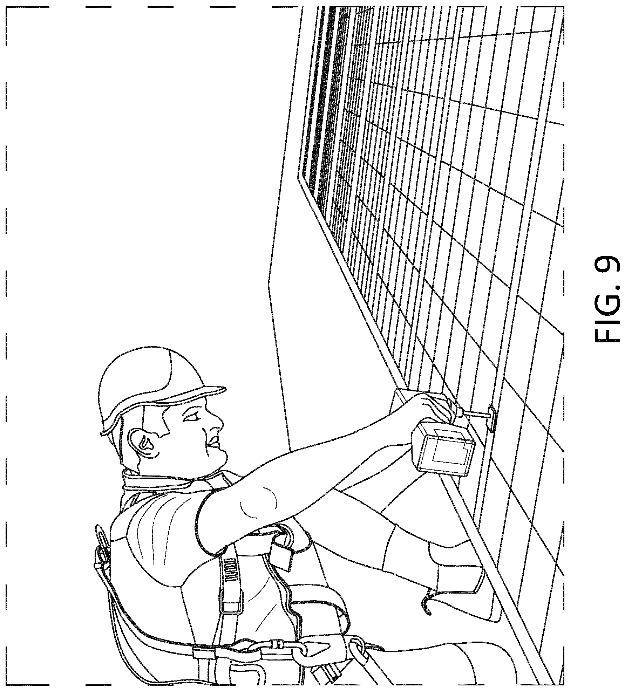

FIG. 6 shows a schematic illustration of screenshots of examples of the labelling of a virtual image according to different labelling methods: using 2D bounding boxes (A), using 3D bounding boxes (B), performing a semantic segmentation (C), performing an instance segmentation (D), using human key-points labels (E).

FIG.s 7 to 9 show schematic illustrations of natural images where a worker is installing solar panels on a gas station roof.

Implementations of the methods, and in particular of the item-detection neural network and of the training of the item-detection neural network, are now discussed.

In these implementations, the learning is supervised. At each iteration of the learning, a batch of images of the training dataset, with their labels, is fed as input to the item-detection neural network to optimize the weights of the neural network. Each batch may consist of a number of images between 4 and 32, for example 8 or 16 images. In these implementations, the training comprises visiting all the images of the training dataset and modifying them randomly before feeding them as input to the neural network. In other words, the training performs a data augmentation, as known *per se* from machine-learning. The data augmentation may use, as data augmentation module, that provided by the API (Application Programming Interface) used, for example the Google Object Detection API. This module consists of classical data augmentation methods such as random cropping, flipping, rescaling, noise addition, and/or color modification. These methods may be combined and/or randomly selected by the module. The number of epochs may be between 20 and 500, preferably between 50 and 150, for example about 88. The supervised training is done in two times in these implementations: loading the network with its weights pre-trained (for example using COCO pre-trained weights), training the network on the synthesized data (for example with 50 epochs), and then training the network on the real data (for example with about 88 epochs). The training comprises in these implementations, for each phase of the training, splitting the training data into three parts: a first part (for example 80% of the data) for the training a second part (for example 10% of the data) for the validation (*i*.*e*. at each epoch the network is tested on this second part), and a third part (for example 10% of the data) for the testing (*i*.*e*. this part is never seen during training and is used to test the performances of the trained network, *e*.*g*. to compare them with performances of other models).

In an example, the training dataset may have a number of training samples of about 90 000 images. With batches having a size of 8 images / training samples, the number of epoch may be such that an order of magnitude of 1 000 000 batches are visited in total in the training, thus the number of epoch may for example be about 88. By "about" a certain value, it is meant exactly the certain value or an approximation of the certain value +/- 10%.

The item-detection neural network in these implementations has the EfficientDet architecture, for example the D0 and D4 versions. The model outputs a list of bounding boxes (*e*.*g*. rectangular bounding boxes) each with a caption/label/ID of the item within the box (and thus detected by the network) and with a confidence value. The number of bounding boxes per image may be fixed and predefined, for example parameterized via the API. This number may be large, for example larger than 10000, so that the method may in implementations apply a post-processing to select the best bounding boxes. The post-processing may be state-of-the-art and may be provided by the API. It may comprise two steps: 1) NonMaxSuppression, which is a method that keeps, for a same item, the best bounding box (*i*.*e*. having the best confidence score), and 2) keeping the best bounding boxes via a threshold on the confidence value.

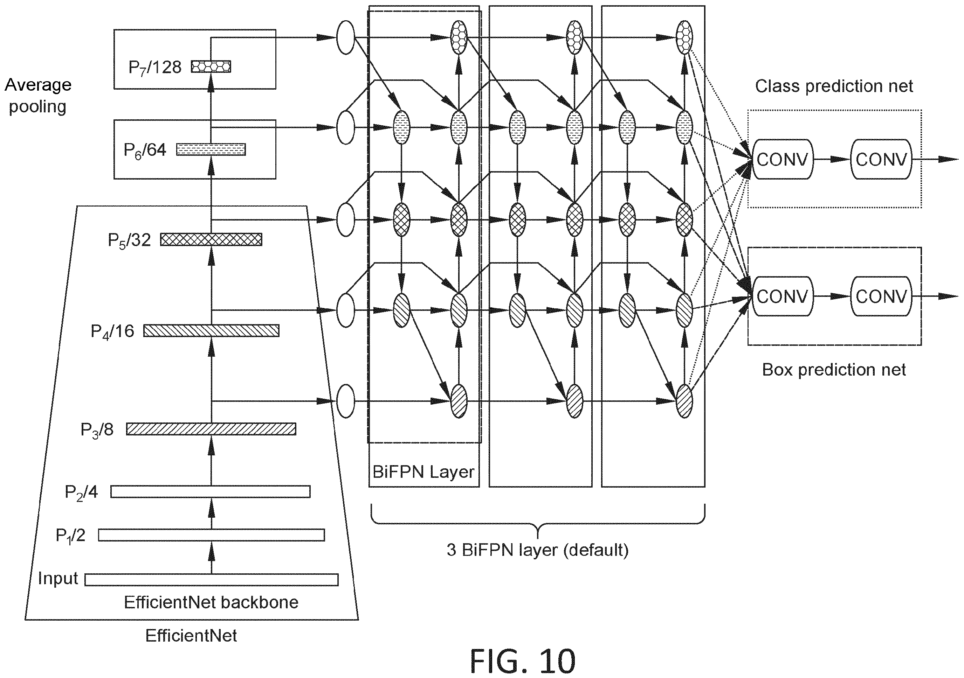

FIG. 10 shows a schematic illustration of the EfficientDet architecture. The first module is the EfficientDet backbone (network used for image classification), and is the CNN parts. In the method, the last layers that perform the classification step are removed. The second module is the BiFPN module (Feature Pyramidal Network) and is used for recombining the different scales obtained as output of the EfficientDet backbone. In output, there are two modules introduced for bounding box detection (Box Prediction Net) and item detection (Class Prediction Net). The network is thus made of two output modules: one that estimates the bounding boxes, and one that estimates the label/caption/ID of the item (with its confidence value). The associated loss function, which is optimized during the training, is the combination of two losses, one for each output module: the BoxLoss, which is a HubertLoss on the covering differences between the ground truth bounding box and the predicted bounding box, and the ClassLoss, which is a variant from the Crossentropy, the focalLoss. The loss is the sum of these two losses.

Implementations of the detection method are now discussed with reference to FIG.s 11 to 13.

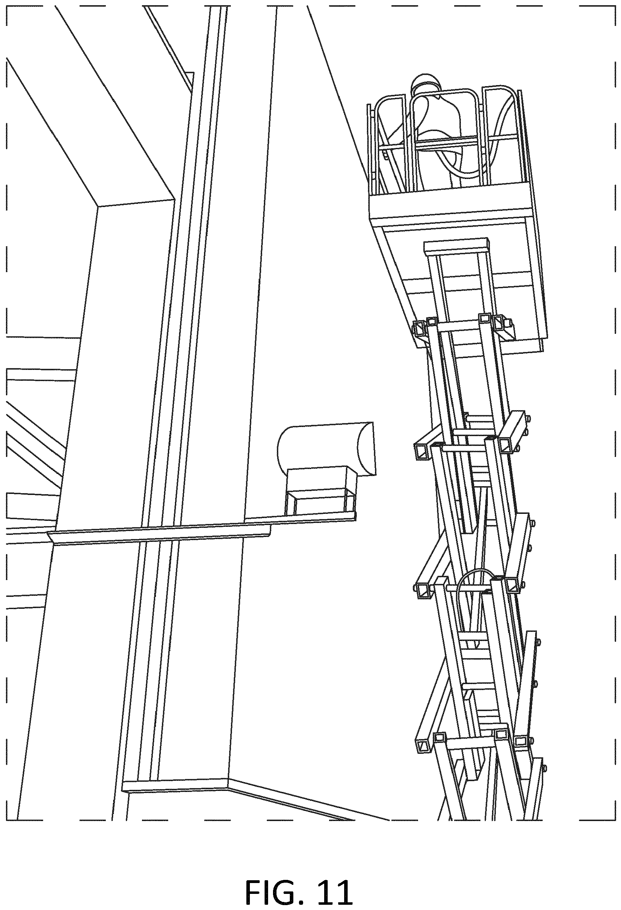

FIG. 11 shows an example of the input image and illustrates the application of the first contextualization-detection neural network. This network outputs a description of the context of the image (*e*.*g*. work at height, work on a roof, work on a trench). In the example of FIG. 11, the network outputs "A man on a scissor lift working on the side of a building". The first contextualization-detection neural network used in these implementations is the BLIP model, the Coca model, the GIT model, or the Lemon model, which have been previously discussed.

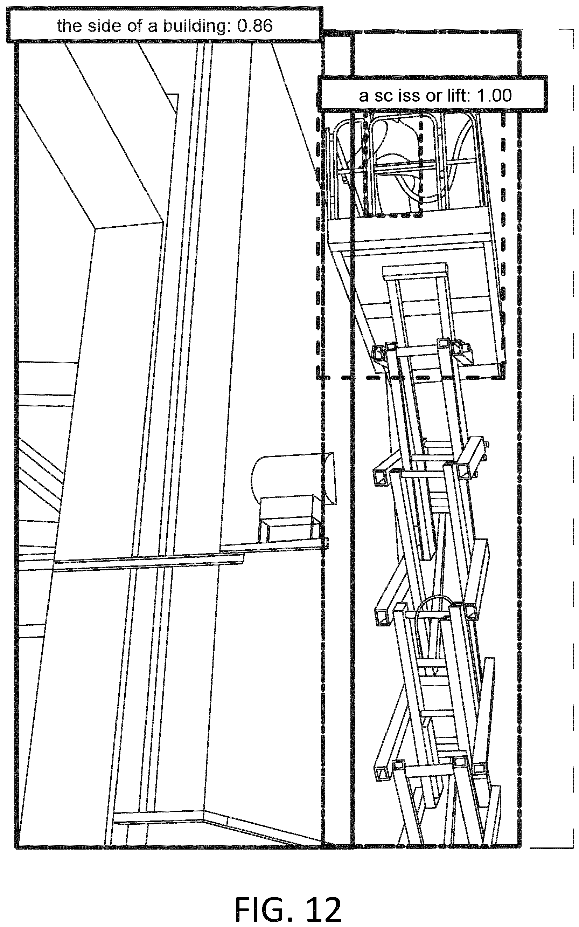

FIG. 12 illustrates the application of the second contextualization-detection neural network, which detects the human operators (here on the lift) and the large items (equipment not work by the operators, here the lift, and other context-related items, here the side of the building). The second contextualization-detection neural network used in these implementations is the MDETR model, the LAVIS model, or the OCCAM model, which have been previously discussed. As shown on FIG. 12, the model outputs a bounding box around each detected item with a label and a probability that is a confidence score.

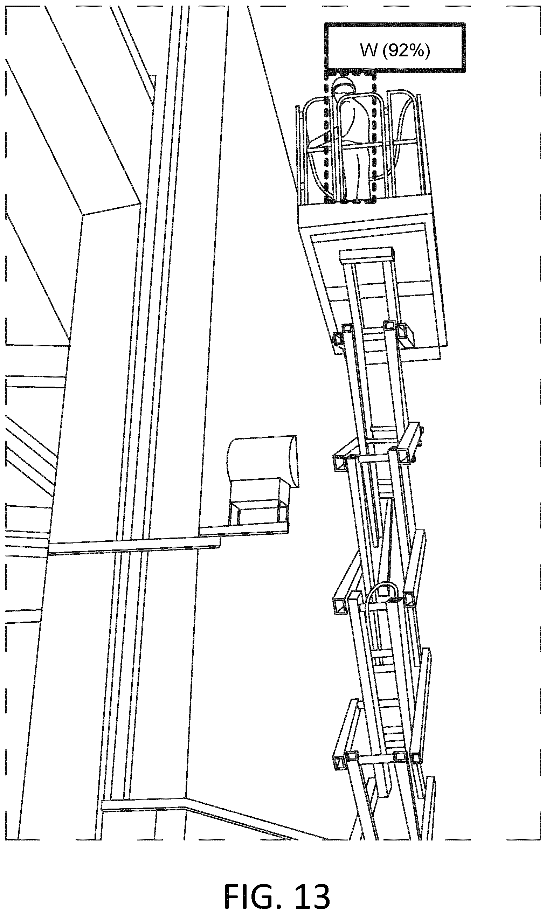

FIG. 13 illustrates the application of the item-detection neural network, which detects protective equipment worn by operators. The equipment detected is here an attached harness.

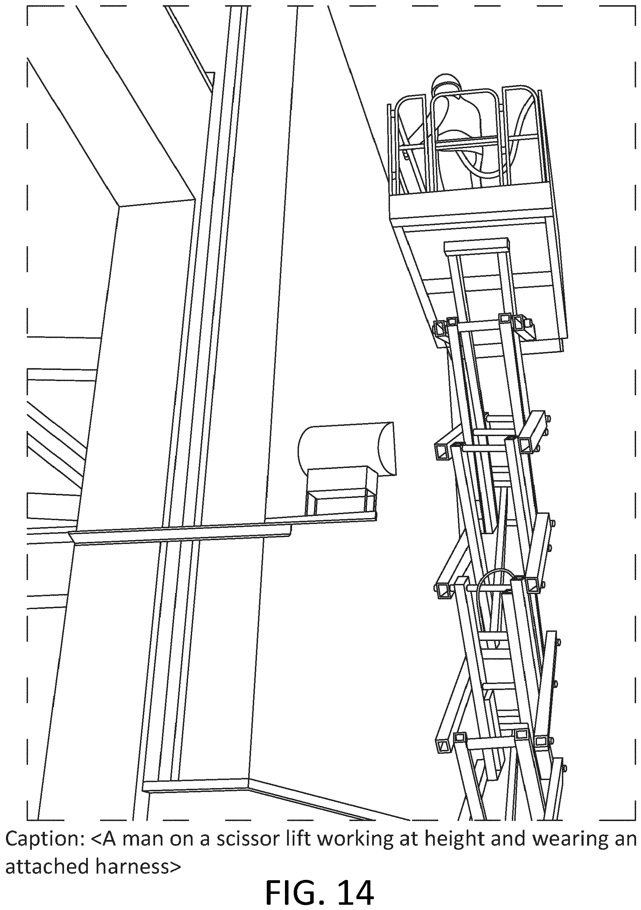

FIG. 14 illustrates the application of the caption-generating neural network, where the outputted image caption ("A man on a scissor lift working at height and wearing an attached harness") is represented on FIG. 14.

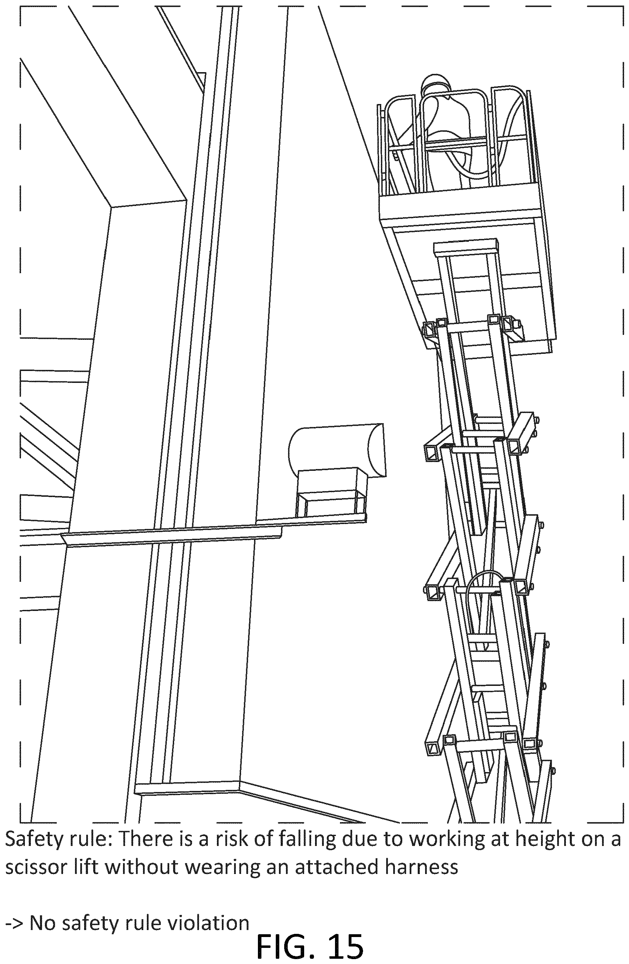

FIG. 15 illustrates the comparison with the reference set of safety rule violations. The dictionary is queried with the words of the caption "A man on a scissor lift working at height and wearing an attached harness". The query allows to retrieve the safety rule violation "There is a risk of falling due to working at height on a scissor lift without wearing an attached harness", and it is detected that the caption does not correspond to this safety rule violation since the caption describes the man working while wearing an attached harness. It is thus outputted by the processing step that the caption does not correspond to a safety rule violation.

Should it have been detected, in the example illustrated on FIG.s 11 to 15, that the man was not wearing a harness, the detection method would have outputted that there is violation of a safety rule, and optionally that this violation was "There is a risk of falling due to working at height on a scissor lift without wearing an attached harness".

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the methods may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 16 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for safety rule violation detection in a construction or constructed site, the method comprising:
- providing an input image of a construction or constructed site;
- detecting in the input image at least one item related to a safety rule of the site by applying an item-detection neural network, the item-detection neural network being configured for detection in the image of items related to safety rules of the site; and
- determining whether the input image corresponds to a safety rule violation by automatically processing the detected at least one item based on the context of the input image.

2. The method of claim 1, wherein the method further comprises:
- detecting a context of the input image by applying one or more contextualization-detection neural networks, said contextualization-detection neural networks being configured for contextualization-detection in an input image,
the determining of whether the input image corresponds to a site safety rule violation comprising automatically processing the detected at least one item and the detected context.

3. The method of claim 2, wherein the method further comprises:
- applying a caption-generating neural network to the detected context and at least one item to determine a caption describing the image,
the processing comprising automatically comparing the caption to a set of reference site safety rule violations.

4. The method of claim 3, wherein comparing the caption to the set of reference safety rule violations comprises querying a dictionary of site safety rule violation words with words of the caption.

5. A computer implemented method of machine-learning, for training an item-detection neural network according to any one of claims 1 to 4, the method comprising:
- providing a training dataset of images, the training dataset comprising synthetized images each of a constructed or construction site and each labelled with at least one label of an item related to a safety rule of the site; and
- training the neural network based on the training dataset.

6. The method of claim 5, wherein the method further comprises:
- synthetizing images of the training dataset.

7. The method of claim 5 or 6, wherein the training dataset further comprises real images each of a constructed or construction site and each labelled with at least one label of an item related to a safety rule of the site.

8. The method of claim 7, wherein the training comprises a first training with the synthetized images and then a second training with the real images.

9. The method of any one of claims 5 to 8, wherein the item-detection neural network has the EfficientDet CNN architecture, the R-CNN architecture, the Fast R-CNN architecture, or the Yolo architecture.

10. The method of any one of claims 5 to 9, wherein the item-detection neural network is trained to take as input an image of a constructed or construction site and to detect in the image one or more items related to safety rules of the site, wherein for each detected item, the neural network is trained to output a bounding box around the item with a label specifying the detected item.

11. The method of claim 10, wherein the training comprises minimizing a loss that includes a sum of:
- a first term that penalizes a covering difference between a bounding box of a labelled item in an input image of the training dataset and a bounding box predicted by the neural network for the same item; and
- a second term that is a Focal Loss.

12. The method of any one of claims 5 to 11, wherein the item-detection neural network is configured for detection of safety equipment and .

13. A computer program comprising instructions for performing the method of any one of claims 1 to 4 and/or the method of any one of claims 5 to 12.

14. A computer-readable data storage medium having recorded thereon the computer program of claim 13.

15. A computer system comprising a processor coupled to a memory, the memory having recorded thereon the computer program of claim 13.
